# EUROPEAN PATENT SPECIFICATION

(11) **EP 2 399 451 B1**
(45) Date of publication and mention of the grant of the patent: **05.06.2013**
(21) Application number: 10167331.7
(22) Date of filing: 25.06.2010
(51) Int. Cl.: A01G 9/02, A01G 9/10, A01G 9/08, D04H 3/07

(54) **Combination of a cup, an envelope and a substrate**
Kombination aus einem Becher, einer Hülle und einem Substrat
Combinaison de coupe, enveloppe et substrat

(43) Date of publication of application: 28.12.2011
(73) Proprietor: L.C. Maan engineering B.V., 8102 HR Raalte (NL); Horticoop B.V., 2665 LP Bleiswijk (NL)
(72) Inventor: Jansen, Andreas Willibrordus Maria, 8131 SZ, Wijhe (NL); Slingerland, Martinus Adrianus, 8131 SZ, Wijhe (NL)
(74) Representative: 't Jong, Bastiaan Jacob

(56) References cited:
- WO-A1-98/11289
- DE-A1- 1 582 742
- DE-A1- 10 327 175
- DE-C- 953 393
- DE-U1- 8 008 438
- GB-A- 191 324 139
- US-A- 3 787 265
- US-A- 4 127 706
- US-A- 4 142 324
- US-A- 4 420 903
- US-A- 5 429 847
- US-A1- 2009 277 084

## Description

The invention relates to growing plants in particular to arranging substrates in a tray of cups.

When growing plants out of seeds or small cuttings, a suitable substrate is arranged in a cup of a tray. The seed or cutting is planted in the substrate, such that roots can grow from the seed or cutting. After a while the plant has grown and has to be repotted to a larger cup or container. The plant then has to be lifted together with the substrate from the cup or container and has to transferred to the larger cup or container.

Especially in the early stages of the growing process of a plant from a seed or cutting, the roots are fragile and should not be damaged when repotting. However this requires that the substrate remains in place around the fragile roots, when repotting.

To have an efficient growth of the plants, a generally loose kind of substrate is desired. This ensures good moistening and good aeration of the substrate and promotes the growth of the plant. However, a loose kind of substrate is difficult to retain around the fragile roots, when repotting the plants.

It is known in the prior art to make the substrate sticky by adding a sticky substance, like glue or clay, to the substrate. This however can have a negative influence on the composition of the substrate. The glue may stick to the cup wall, making it difficult to clean the cups for reuse.

It is furthermore known in the prior art to press the substrate in a sleeve and then cut slices of the filled sleeve. These slices are then placed in the cups. The pressing of substrate in the sleeve compacts the substrate, which has a negative influence on the aeration of the substrate.

US4, 420, 903 discloses a plant pot comprising a filler made of two mirror image halves. The filler is made of composite fibrous and spongeous synthetic plastics which are cohesively bound together in a fluid-permeable state. The filler has a cavity so shaped as to resemble the exterior configuration of a net growth pot, but is of slightly diminished size. The net growth pot contains a young seedling, growing in a second filler. With the net pot in the cavity, the two mirror image halves have a slightly greater size than the plant pot to provide a snug friction fit of the two mirror image halves with the pot.

It is also known to use cardboard containers in which the substrate is arranged. The cardboard containers can be arranged in a larger container with substrate. The cardboard container will eventually putrefy. However, the cardboard container will limit the growth of the roots as long as the cardboard has not yet been putrefied.

It is an object of the invention to reduce the above mentioned disadvantages.

This object is achieved by the invention with a combination of a cup for growing plants, an envelope arranged in the cup, wherein the envelope is in close contact with the cup wall and a substrate arranged in the envelope, wherein the envelope has a net like structure.The envelope with net like structure ensures that the substrate is kept together when repotting a plant, independent of the structure of the substrate. If the substrate has a very loose structure, then the envelope still keeps the substrate together. The net-like structure of the envelope also ensures that the roots can grow freely after repotting the plant. The roots can also grow around and trough the strings of the net like structure, which provides more coherence of the substrate, envelope and roots, which simplifies the repotting.

The net like structure of the envelope is composed out of fibers of plastic, which are adhered to each other to provide a flexible and firm structure. The plastic fibers can simply be arranged in a sticky state by heating, such that a net like structure is formed by the plastic fibers.

Preferably, the envelope is made out of a biodegradable material, for example polylactic acid (PLA). By using a biodegradable material, it is ensured, that the envelope will disintegrate after a certain time and will not restrict further root growth. When using for example a PLA plastic, the degrading period can be set and tuned, such that the envelope is sufficiently degraded at a desired growth state of the plant.

In another preferred embodiment of the combination according to the invention, the surface part, directed towards the cup wall, of the strings of the net-like structure are convex. As a result roots can more easily grow around the net like structure of the envelope. When a growing root is bound by the wall of the cup, and grows against a string of the envelope, the root will creep between the wedge like space of the cup wall and the convex surface of the strings of the envelope.

The convex surface part also reduces the contact surface between the envelope and the cup wall, which reduces the friction and facilitates the removal of the envelope with substrate and plant from the cup.

In yet another embodiment, the cup is arranged in a tray. Trays are typically used in the cultivation of plants.

In another embodiment, the envelope has a bottom wall and an upright peripheral wall arranged along the circumference of the bottom wall, wherein the walls have a net like structure. The envelope is preferably firm, such that it will not collapse under its own weight. Such an envelope can be placed in a cup of a tray, after which is filled with substrate in a conventional way. As the envelope does not collapse, the envelope will be filled with substrate.

The firm envelope according to the invention can also be used as replacement for conventional pots in which plants are transported. The envelope can be put into the ground together with the plant and there is waste, like a conventional pot.

In a preferred embodiment of the envelope according to the invention, the mesh width of the peripheral wall varies along the height of the peripheral wall. Preferably, the peripheral wall has at least two zones of different mesh width.

By varying the mesh width of the net like structure of the envelope wall, the direction of growth of the roots can be influenced. It could be controlled that the roots grow in a more vertical downward direction inside the substrate, or in a more horizontal direction, to the outside of the substrate.

The invention also relates to a method for manufacturing an envelope of a combination according to the invention, the method comprising the steps of:
- providing a mold having an external surface which is rotating around an axis;
- swirling at least one liquid jet of plastic onto the surface of the mold while rotating the mold;
- removing the envelope from the mold when the plastic had solidified.

Swirling of a liquid jet of plastic is for example known in the field of stacking boxes. After a layer of boxes is provided, a jet of liquid plastic is swirled randomly over the top surface of the layer. This plastic provides an anti slip layer for the next layer of boxes.

In the method according to the invention, the jet of liquid plastic is directed to a mold, such that a randomly arranged string of plastic is generated. By rotating the mold, the random pattern of plastic is evenly distributed over the surface of the mold providing a envelope with a net like structure.

The swirling is a fast process, such that a large amount of envelopes can be made in a short time.

In a preferred embodiment of the method according to the invention at least two liquid jets of plastic are swirled onto the surface of the mold, wherein a first jet covers a first zone of the mold surface and wherein a second jet covers a second zone of the mold surface.

The speed of swirling and the amount of plastic can simply be set. By making the speed and/or amount of plastic between the two jets different, two zones can be generated on the envelope.

These and other features of the invention will be elucidated in conjunction with the accompanying drawings.
Figure 1 shows a perspective view an embodiment of the combination according to the invention.
Figure 2 shows the combination of figure 1 in cross sectional view.
Figure 3 shows schematically an embodiment of a method according to the invention.

Figure 4 shows a detail of the combination according to figure 1.

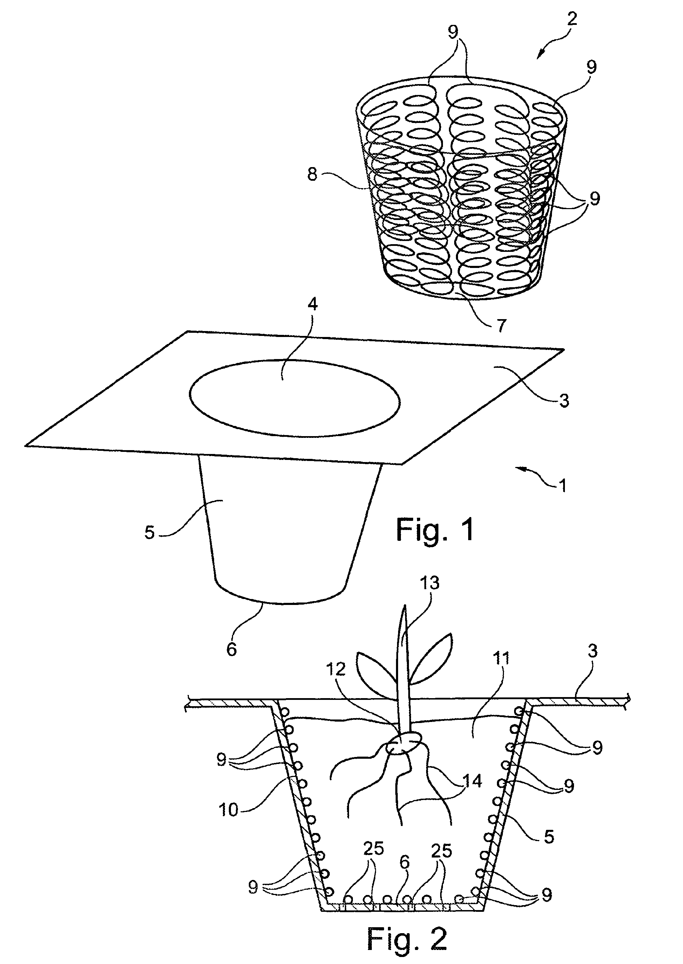

In figure 1 a combination according to the invention is shown. This combination has a cup 1 and an envelope 2. The cup 1 is preferably part of a tray and for example thermoformed in a plastic sheet 3. As a result an opening 4 is arranged in the plastic sheet 3. From the circumference of the opening 4, a side wall 5 depends, which is closed at the bottom by a bottom wall 6 with drainage openings 25.

The envelope 2 has a bottom wall 7 and an upright peripheral wall 8 arranged along the circumference of the bottom wall 7. The bottom wall 7 and the peripheral wall 8 of the envelope 2 is composed out of a plurality of fibers or strings 9.

When the envelope 2 is placed in the cup 1, the peripheral wall 8 is in close contact with the inner surface 10 of the cup 1. Then the cup 1 and envelope 2 is filled with a substrate 11. In this substrate 11 a seed 12, a cutting or meristem culture is planted from which a plant 13 and roots 14 grow.

Due to the net like structure of the envelope 2, the combination of envelope 2, substrate 11, plant 13 and roots 14 can easily be lifted from the cup 1 and be repotted in a larger container.

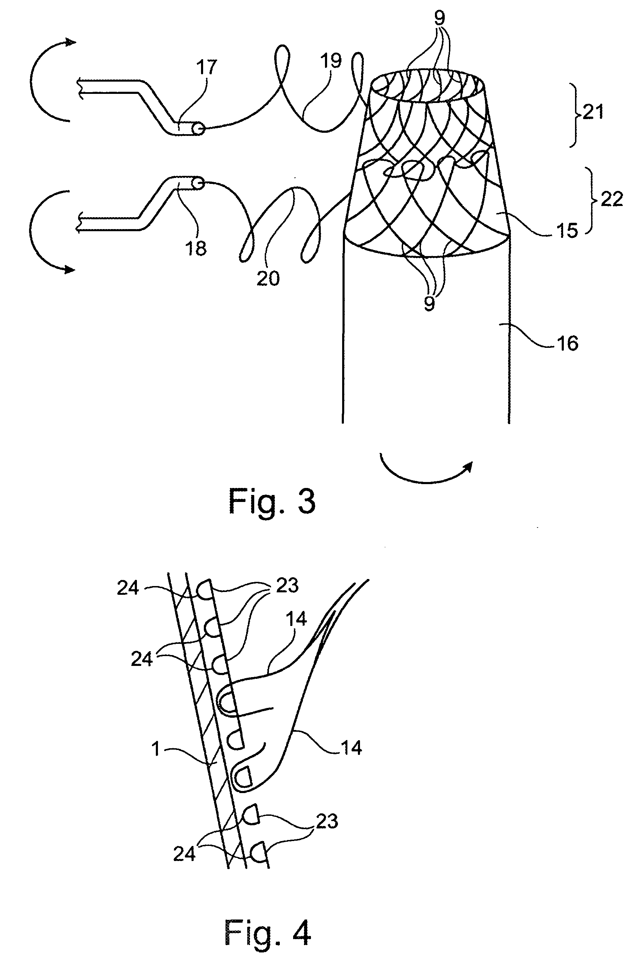

In figure 3 an embodiment of a method according to the invention is schematically shown. A mold 15 is arranged on a rotating axle 16. Two nozzles 17, 18 are arranged next to the mold 15. These nozzles 17, 18 make a circular movement, such that a swirling jet 19, 20 of liquid plastic is generated.

It is also possible to achieve a swirling jet 19, 20 by guiding a turbulent airstream along a stationary nozzle. The turbulent air will move the linear jet of liquid plastic resulting from the stationary nozzle, such that a swirling jet 19, 20 is achieved.

The jets 19, 20 are directed to the outer surface of the mold 15. As a result of the rotating movements, a net like structure of strings of plastic 9 is generated on the mold 15. Due to the two jets 19, 20, two zones 21, 22 are generated in the envelope 2. By changing the rotation speed of the nozzles 17, 18 and / or amount of plastic in the jets 19, 20, the mesh width in the zones 21, 22 can be adjusted.

Another advantage of the method according to the invention, is that the strings of plastic will have a flat surface part 23 on the side, where the string did contact the mold surface 15 and a convex part on the other side. (See figure 4).

When the envelope 2 is placed in the cup 1, the convex parts 24 of the strings 9 will contact the inner surface of the cup 1. As a result the roots 14 can easily intertwine with the strings 9 providing additional coherence between the substrate 11, roots 14 and envelope 2. This facilitates the repotting of the plants, without damaging the fragile roots 14.

## Claims

1. Combination of a cup (1) for growing plants, an envelope (2) arranged in the cup (1), wherein the envelope (2) is in close contact with the cup wall (10) and a substrate (11) arranged in the envelope (2), wherein the envelope (2) has a net like structure, **characterized in that** the net like structure of the envelope (2) is composed out of fibers (9) of plastic, which are adhered to each other to provide a flexible and firm structure.

2. Combination according to claim 1, wherein the envelope (2) is made out of a biodegradable material, for example polyactic acid (PLA).

3. Combination according to any of the preceding claims, wherein the surface part (24), directed towards the cup wall (10), of the strings (9) of the net like structure is convex.

4. Combination according to any of the preceding claims, wherein the cup (1) is arranged in a tray.

5. Combination according to any of the preceding claims, wherein the envelope (2) has a bottom wall (7) and an upright peripheral wall (8) arranged along the circumference of the bottom wall (7), wherein the walls (7, 8) have a net like structure.

6. Combination according to claim 5, wherein the mesh width of the peripheral wall (8) varies along the height of the peripheral wall.

7. Combination according to claim 6, wherein the peripheral wall (8) has at least two zones (21, 22) of different mesh width.

8. Method for manufacturing an envelope (2) of a combination according to any of the preceding claims 1-4, the method comprising the steps of:
- providing a mold (15) having an external surface which is rotating around an axis;
- swirling at least one liquid jet (19, 20) of plastic onto the surface of the mold (15) while rotating the mold (15);
- removing the envelope (2) from the mold when the plastic has solidified.

9. Method according to claim 8, wherein at least two liquid jets (19, 20) of plastic are swirled onto the surface of the mold (15), wherein a first jet (19) covers a first zone (21) of the mold surface (15) and wherein a second jet (20) covers a second zone (22) of the mold surface (15).

## Patentansprüche

1. Kombination einer Schale (1) zum Züchten von Pflanzen, wobei eine Hülle (2) in der Schale (1) eingerichtet ist, wobei die Hülle (2) in enger Berührung mit der Schaleninnenwand (10) ist und ein Substrat (11) in der Hülle (2) eingerichtet ist, wobei die Hülle (2) eine netzähnliche Struktur hat, **dadurch gekennzeichnet, dass** die netzähnliche Struktur der Hülle (2) aus Fasern (9) aus Kunststoff besteht, die aneinander haften, um eine elastische und feste Struktur bereitzustellen.

2. Kombination nach Anspruch 1, wobei die Hülle (2) aus einem biologisch abbaubaren Material hergestellt ist, zum Beispiel aus Polymilchsäure (PLA).

3. Kombination nach einem der vorhergehenden Ansprüche, wobei der Oberflächenteil (24) der Fasern (9) der netzähnlichen Struktur, der zu der Schalenwand (10) gerichtet ist, konvex ist.

4. Kombination nach einem der vorhergehenden Ansprüche, wobei die Schale (1) in einem Tablett eingerichtet ist.

5. Kombination nach einem der vorhergehenden Ansprüche, wobei die Hülle (2) eine Bodenwand (7) und eine aufrechte umfängliche Wand (8) aufweist, die entlang des Umfangs der Bodenwand (7) eingerichtet ist, wobei die Wände (7, 8) eine netzähnliche Struktur haben.

6. Kombination nach Anspruch 5, wobei die Maschenweite der umfänglichen Wand (8) entlang der Höhe der umfänglichen Wand variiert.

7. Kombination nach Anspruch 6, wobei die umfängliche Wand (8) wenigstens zwei Bereiche (21, 22) mit unterschiedlicher Maschenweite hat.

8. Verfahren zum Herstellen einer Hülle (2) einer Kombination nach einem der vorhergehenden Ansprüche 1 bis 4, wobei das Verfahren die folgenden Schritte aufweist:
- Bereitstellen einer Form (15), die eine äußere Oberfläche hat, die um eine Achse rotiert,
- Wirbeln mindestens eines flüssigen Strahls (19, 20) von Kunststoff auf die Oberfläche der Form (15), während die Form (15) dreht,
- Entfernen der Hülle (2) von der Form, wenn sich der Kunststoff verfestigt hat.

9. Verfahren nach Anspruch 8, wobei mindestens zwei flüssige Strahlen (19, 20) von Kunststoff auf die Oberfläche der Form (15) gewirbelt werden, wobei der erste Strahl (19) einen ersten Bereich (21) der Formoberfläche (15) deckt, und wobei ein zweiter Strahl (20) einen zweiten Bereich (22) der Formoberfläche (15) deckt.

## Revendications

1. Combinaison d'une coupe (1) pour faire croître des plantes, d'une enveloppe (2) aménagée dans la coupe (1), dans laquelle l'enveloppe (2) est en contact étroit avec la paroi (10) de la coupe, et d'un substrat (11) aménagé dans l'enveloppe (2), dans laquelle l'enveloppe (2) a une structure en treillis, **caractérisée en ce que** la structure en treillis dans l'enveloppe (2) est composée de fibres (9) en plastique qui sont collées l'une à l'autre pour fournir une structure souple et solide.

2. Combinaison selon la revendication 1, dans laquelle l'enveloppe (2) est constituée d'un matériau biodégradable, par exemple de l'acide polylactique (PLA).

3. Combinaison selon l'une quelconque des revendications précédentes, dans laquelle la partie de surface (24), dirigée vers la paroi (10) de la coupe, des mailles (9) de la structure de treillis est convexe.

4. Combinaison selon l'une quelconque des revendications précédentes, dans laquelle la coupe (1) est aménagée dans un plateau.

5. Combinaison selon l'une quelconque des revendications précédentes, dans laquelle l'enveloppe (2) a une paroi inférieure (7) et une paroi périphérique dressée (8) aménagée autour de la circonférence de la paroi inférieure (7), où les parois (7, 8) ont une structure en treillis.

6. Combinaison selon la revendication 5, dans laquelle la largeur des mailles de la paroi périphérique (8) varie en fonction de la hauteur de la paroi périphérique.

7. Combinaison selon la revendication 6, dans laquelle la paroi périphérique (8) a au moins deux zones (21, 22) de différentes largeurs de mailles.

8. Procédé de fabrication d'une enveloppe (2) d'une combinaison selon l'une quelconque des revendications 1 à 4, le procédé comprenant les étapes consistant à :
- mettre en oeuvre un moule (15) ayant une surface externe qui tourne autour d'un axe ;
- faire tourbillonner au moins un jet liquide (19, 20) de plastique sur la surface du moule (15) tout en faisant tourner le moule (15) ;
- retirer l'enveloppe (2) du moule lorsque le plastique s'est solidifié.

9. Procédé selon la revendication 8, dans lequel au moins deux jets liquides (19, 20) de matière plastique sont soumis à un mouvement tourbillonnant sur la surface du moule (15), dans lequel un premier jet (19) couvre une première zone (21) de la surface (15) du moule et dans lequel un second jet (20) couvre une seconde zone (22) de la surface (15) du moule.
